(19) 

Europäisches
Patentamt

European
Patent Office

Office européen
des brevets

(11) **EP 1 828 832 B1**

(12) **EUROPEAN PATENT SPECIFICATION**

(45) Date of publication and mention
of the grant of the patent:
**22.05.2013 Bulletin 2013/21**

(21) Application number: **05850693.2**

(22) Date of filing: **12.12.2005**

(51) Int Cl.:
*G02B 27/01* (2006.01)    *G02B 27/42* (2006.01)
*G02B 5/32* (2006.01)

(86) International application number:
**PCT/IB2005/003749**

(87) International publication number:
**WO 2006/064334 (22.06.2006 Gazette 2006/25)**

(54) **GENERAL DIFFRACTIVE OPTICS METHOD FOR EXPANDING AN EXIT PUPIL**

ALLGEMEINES BEUGENDES OPTIKVERFAHREN ZUR ERWEITERUNG EINER
AUSGANGSPUPILLE

PROCEDE GENERAL D'OPTIQUES DE DIFFRACTION POUR PROLONGEMENT DE PUPILLE DE
SORTIE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.12.2004 US 11481
11.08.2005 US 202653**

(43) Date of publication of application:
**05.09.2007 Bulletin 2007/36**

(73) Proprietor: **Nokia Corporation
02150 Espoo (FI)**

(72) Inventor: **LEVOLA, Tapani
FIN-33270 Tampere (FI)**

(74) Representative: **Piotrowicz, Pawel Jan Andrzej et
al
Venner Shipley LLP
Byron House
Cambridge Business Park
Cowley Road
Cambridge CB4 0WZ (GB)**

(56) References cited:
WO-A-99/52002           WO-A1-2004/055556
US-A1- 2004 062 502     US-A1- 2004 233 534
US-B1- 6 580 529

• **CHRISTOPHER PALMER: "DIFFRACTION
GRATING HANDBOOK, CHAPTER 2: THE
PHYSICS OF DIFFRACTION GRATINGS"** [Online]
2002, THERMO RGL , ROCHESTER, NEW YORK,
US , XP002491128 Retrieved from the Internet:
URL:http://instructor.physics.lsa.umich.ed
u/adv-labs/Atomic%20Spectroscopy/DiffGrati
ng.pdf> [retrieved on 2008-07-04] * page 13,
paragraph 2 *
• **PATENT ABSTRACTS OF JAPAN** vol. 006, no. 079
& JP 57 014 806 A (TOMIJIMA TAKUMI) 26 January
1982

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

The present invention relates generally to a display device and, more specifically, to a general diffractive optics method that uses a plurality of diffractive elements for expanding the exit pupil of a display for viewing.

While it is a common practice to use a low-resolution liquid-crystal display (LCD) panel to display network information and text messages in a mobile device, it is preferred to use a high-resolution display to browse rich information content of text and images. A microdisplay-based system can provide full color pixels at 50-100 lines per mm. Such high-resolution is generally suitable for a virtual display. A virtual display typically consists of a microdisplay to provide an image and an optical arrangement for manipulating light emerging from the image in such a way that it is perceived as large as a direct view display panel. A virtual display can be monocular or binocular.

The size of the beam of light emerging from imaging optics toward the eye is called exit pupil. In a Near-Eye Display (NED), the exit pupil is typically of the order of 10mm in diameter. Further enlarging the exit pupil makes using the virtual display significantly easier, because the device can be put at a distance from the eye. Thus, such a display no longer qualifies as an NED, for obvious reasons. Head-Up Displays are examples of the virtual display with a sufficiently large exit pupil.

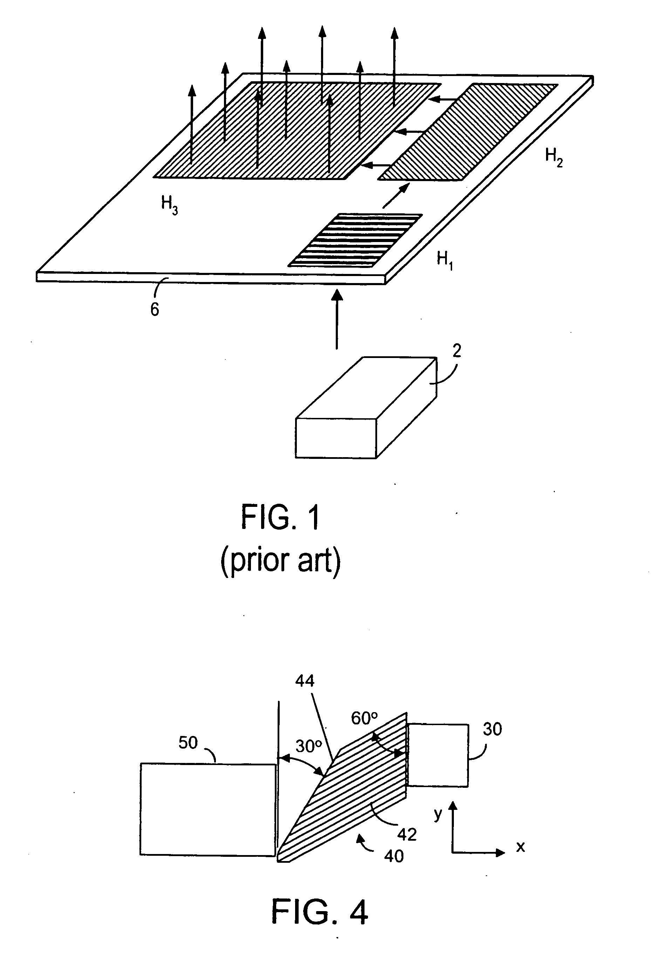

PCT patent application WO 99/52002 "Holographic optical Devices" by Yaakov Amitai and Asher Friesem and US patent US 6,580,529 Holographic optical Devices" by Yaakov Amitai and Asher Friesem disclose a method of enlarging the exit pupil of a virtual display. The disclosed method uses three successive holographic optical elements (HOEs) to enlarge the exit pupil. In particular, the HOEs are diffractive grating elements arranged on a planar, light transmissive substrate **6,** as shown in Figure **1**. As shown, light from an image source **2** is incident upon the first HOE, or **H1,** which is disposed on one side of the substrate **6.** Light from **H1,** coupled to the substrate **6,** is directed toward the second HOE, or **H2,** where the distribution of light is expanded in one direction. **H2** also redirects the expanded light distribution to the third HOE, or **H3,** where the light distribution is further expanded in another direction. The holographic elements can be on any side of the substrate **6**. **H3** also redirects the expanded light distribution outward from the substrate surface on which **H3** is disposed. The optical system, as shown in Figure 1, operates as a beam-expanding device, which approximately maintains the general direction of the light beam. Such a device is also referred to as an exit pupil expander (EPE).

In an EPE, the energy of the exit beam relative to the input beam depends upon the coupling between adjacent optical elements. As the energy output of the image source is limited, it is desirable to achieve a high coupling efficiency between adjacent optical elements.

It is an objective of the present invention to improve the optical coupling between two optical elements such as diffractive optical elements in an exit pupil extender. This objective can be achieved by using a diffractive optical element having the grating lines are oriented in a certain direction as optical coupler disposing between the input optical element and the exit optical element. In particular, the grating lines of the optical coupler are oriented substantially at a 60-degree from the grating lines of the input and exit optical element.

According to a first aspect of the present invention, there is provided an optical device as specified in claim **1**.

According to a second aspect of the present invention, there is provided a method of optical coupling in an optical device as specified in claim **21**.

Optional features are specified in the dependent claims.

The present invention will become apparent upon reading the description taken in conjunction with Figures 2-10.

Figure 1 is a schematic representation showing a prior art exit pupil extender using three diffractive elements;

Figure 2 is a schematic representation showing a top view of an exit pupil extender, according to the present invention;

Figure 3 a schematic representation showing an isometric view of the exit pupil extender, according to the present invention;

Figure 4 is a schematic representation showing the orientation of the grating lines in the intermediate diffractive optical element, according to the present invention;

Figure 5 is a schematic representation showing another embodiment of the exit pupil extender, according to the present invention;

Figure 6 is a schematic representation showing typical reflection and diffraction in a diffractive optical element;

Figure 7 is a schematic representation showing an electronic device, having a virtual display system;

Figure 8 is a schematic representation showing geometry of a generalized 2D exit pupil expander, according to the present invention;

Figure 9a and 9b is a schematic representation of an optical beam propagating in an intermediate diffraction grating (side and top views, respectively), according to the present invention; and

Figure 10 is a schematic representation of a layout of an intermediate diffraction grating, according to the present invention.

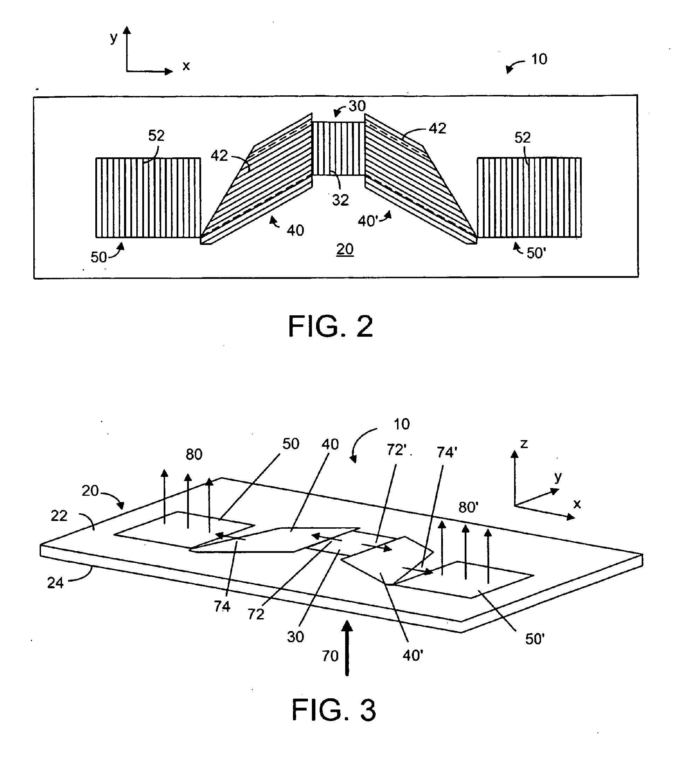

In the exit pupil extender (EPE) **10,** according to the present invention, has a substrate **20** made of an optical material. On the substrate **20,** there are one input optical element **30** and one or two exit optical elements **50,** as shown in Figure 2. The EPE **10** also has one or two intermediate optical couplers **40, 40'** each disposed between the input optical element **30** and one of the exit optical elements **50, 50'.** The couplers **40, 40'** serve as exit pupil extending components. The optical elements **30, 50, 50'** and the couplers **40, 40'** are diffractive optical elements (DOEs), for example. Each of the DOEs has a plurality of grating lines for diffraction purposes. As shown, the optical element **30** has a plurality of grating lines **32;** the optical element **40 (40')** has a plurality of grating lines **42** and the optical element **50 (50')** has a plurality of grating lines **52.**

Figure 3 is an isometric view showing the relationship between an input beam **70** and two exit beams **80, 80'.** As shown, the substrate **20** has a first side **22** and a second side **24.** The input beam **70** enters the EPE **10** on one side of the substrate **20** and exit beams **80, 80'** exit the EPE **10** on a different side of the substrate **20,** in a direction substantially parallel to the input beam.

As shown in Figure 2, the grating lines **32** and **52** in DOEs **30** and **50 (50')** are substantially parallel to the Y-axis. In order that the DOE **40 (40')** acts like a beam extender, and that its efficiency is optimized, the grating lines in the coupler DOEs **40 (40')** are substantially at a 60-degree angle in reference to the Y-axis, as shown in Figure **4.** As such, the light entering one side of the DOEs **40 (40')** is trapped in the grating area between the first side **22** and the second side **24** until it emerges out from the other side of the DOEs **40 (40').** Furthermore, the shape of the DOEs **40 (40')** is designed so that, at the output end, the rays leaving the grating area are substantially parallel to the X-axis, as shown in Figure 3.

According to one embodiment of the present invention, the grating periods in all DOEs **30, 40 (40')** and 50 **(50')** are substantially the same. However, while the DOE **30** and **50 (50')** have the same period, the DOE **40** is allowed to deviate from those slightly without disturbing the functioning of the EPE system. Nevertheless, each of the gratings has a unique grating profile, optimized to its function. DOE **30** and DOE **40 (40')** typically have a deep profile and a proper filling ratio.

As shown in Figure 3, when the EPE **10** is used to expand a light beam **70** incident upon the DOE **30,** the beam **70** is diffracted and reflected, due to total internal reflection (TIR) on one side of substrate **20** (if the DOE 30 is disposed on the upper side **22,** then TIR occurs on the lower side **24**) toward the DOEs **40 (40')** substantially along the direction **72 (72').** The beam is further diffracted from the DOEs **40 (40')** to the direction that makes substantially a 60 degree conical angle with respect to the direction **72 (72').** After a TIR in the lower side of the substrate **20,** the beam encounters the grating **40 (40')** again and then is diffracted again in a direction parallel to direction **72 (72').** Finally, after some successive steps, the beam enters the DOEs **50 (50')** substantially along the direction **74 (74'),** which is substantially the same as direction **72 (72').** It is important to ensure that the beam encounters the grating **40 (40')** an even number of times. Otherwise the beam does not enter DOE **50 (50')** exactly at the correct direction. Finally, the beam exits the DOEs **50, 50'** as exit beams **80, 80'.** It should be noted, however, that the cross section of the exit beams **80, 80'** is larger than that of the input beam **70** as the input beam is expanded in the DOEs both in the Y and X axes. As shown in Figure 3, the incident angle of the light beam entering the DOE **40** is substantially along the direction **72,** which is substantially in the XZ plane. The direction **72** can be calculated from the conical grating equations, and generally in practical cases, the beam in the direction **72** does not exactly travel in the XZ plane, but deviates some degrees from that.

Figure 4 shows the orientation of the grating lines **42** in the DOE **40.** As mentioned above, the grating lines **42** are substantially at a 60-degree angle in reference to the Y-axis. Thus, the grating lines **42** are substantially at a 60-degree conical angle in reference to the incident direction **72** (see Figure 3). However, the conical angle can deviate from 60 degrees as long as in the diffraction there exists only two reflected diffraction modes, zero and first order. It should be noted that, in conical diffraction, the beam is, in general, not perpendicular to the grating lines. The conical angle is defined from the perpendicular position. This condition depends on the incoming beam angles **(70),** grating period and on the refractive index of the material. This acceptable angular space must be calculated case by case using the conical diffraction formulas. This acceptable angular space is generally so large, that the system works in most of the practical cases, even wide field of view cases. As mentioned earlier, it is necessary that the beam meets an even number of times the grating **40 (40').** Therefore the angle of the leaving edge of the DOE **40 (40')** must be such that this condition is fulfilled. This angle can be calculated from the conical diffraction formulas and the angular spread of the incoming beams. Generally, the leaving edge of DOE **40 (40')** thus forms an angle slightly larger than 30 degrees with respect to the Y-axis. The DOE **40 (40')** is typically a binary type grating and, in the geometry described in this invention, the diffraction efficiency of the first diffraction order can be as high as 90%. Furthermore, the grating efficiency can be tuned to be polarization independent with a proper filling ratio.

The DOE **40'** is substantially a mirror image of the DOE **40.** Thus, the orientation of the grating lines **42'** is similar to that of the grating lines **42.**

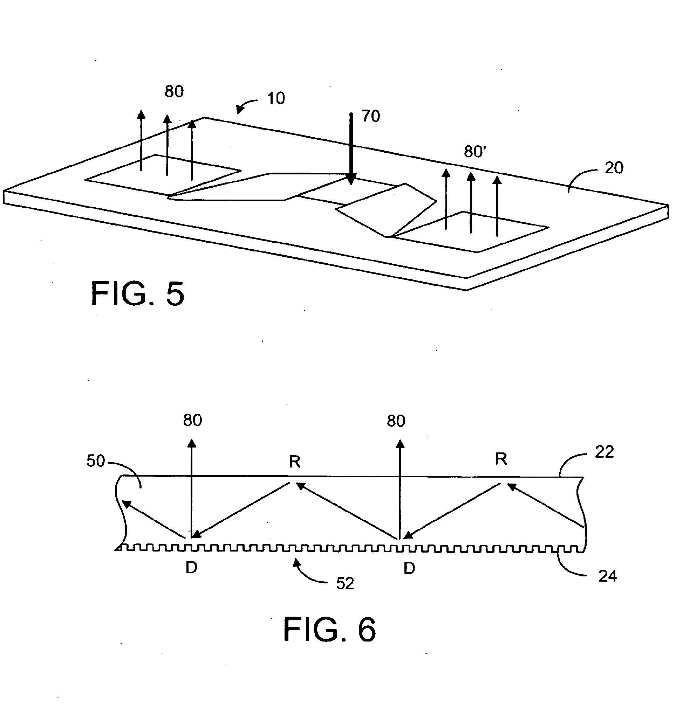

As shown in Figure 3, the input beam **70** entering the DOE **30** on one side of the EPE **10,** while the exit beams **80, 80'** leave the DOE **50, 50'** on the other side of the EPE **10.** It should be noted that generally arrangement of the diffraction gratings in the EPE **10** is such that the exit beams **80** and **80'** exit the EPE **10** also on the same side as the input beam **70** entering the EPE **10,** as shown in Figure 5.

It is known in the art that the beam expansion in the exit beams **80, 80'** as compared to the input beam **70** is partly due to the different dimensions and shapes in the various DOEs, and partly due to the multiple diffraction and total internal reflection (TIR). As shown in Figure 6, the incoming beam is reflected by TIR at different locations R and diffracted by the grating lines **52** at diffraction locations D, resulting in the exit beam **80.**

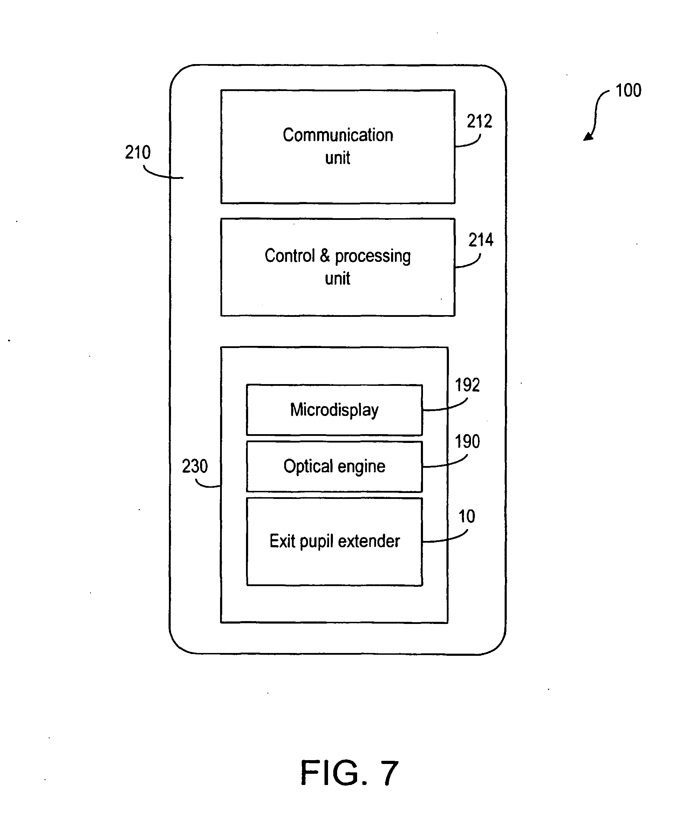

The EPE **10** can be used in a portable device **100,** such as a mobile phone, personal digital assistant (PDA), communicator, portable Internet appliance, hand-hand computer, digital video and still camera, wearable computer, computer game device, specialized bring-to-the-eye product for viewing and other portable electronic devices. As shown in Figure 7, the portable device **100** has a housing **210** to a house a communication unit **212** for receiving and transmitting information from and to an external device (not shown). The portable device **100** also has a controlling and processing unit **214** for handling the received and transmitted information, and a virtual display system **230** for viewing. The virtual display system **230** includes a micro-display or image source **192** and an optical engine **190.** The controlling and processing unit **214** is operatively connected to an optical engine **190** to provide image data to the image source **192** to display an image thereon. The EPE **10,** according to the present invention, can be optically linked to an optical engine **190.**

It should be noted that each of the optical elements **30, 40, 40', 50, 50'** can be diffractive optical elements having grating lines or a holographic diffractive optical element (HOE) having interference fringes. As the name suggests, a holographic diffraction element is holographically produced where at least two coherent light beams are used to produce the fringes. In contrast, a diffraction optical element can be mechanically or chemically produced.

The objective of the present invention is to achieve efficient optical coupling between the various DOEs in an EPE while the DOEs are sized and shaped and arranged for exit pupil expansion. The application for the EPE of the present invention is not limited to virtual displays. The selective reflection control in a planar waveguide (substrate **20),** according to the present invention, can also be used in any application where optical beam expansion in one or more directions is required and light of different wavelengths is used. The diffractive elements are, in fact, optical couplers and light modulator devices for coupling light into the planar waveguide. Thus, the EPE **10,** as shown in Figures 2 to 6, can be viewed as an optical device comprised of a planar waveguide and a plurality of optical couplers (or light modulator devices) disposed adjacent to or on the waveguide for light coupling and manipulating purposes.

The image source **192,** as depicted in Figure 7, can be a sequential color LCOS (Liquid Crystal On Silicon) device, an OLED (Organic Light Emitting Diode) array, an MEMS (MicroElectro Mechanical System) device or any other suitable micro-display device operating in transmission, reflection or emission.

Moreover, the electronic device **100** can be a portable device, such as a mobile phone, personal digital assistant (PDA), communicator, portable Internet appliance, hand-held computer, digital video and still camera, wearable computer, computer game device, specialized bring-to-the-eye product for viewing and other portable electronic devices. However, the exit pupil extender, according to the present invention, can also be used in a non-portable device, such as a gaming device, vending machine, band-o-matic, and home appliances, such as an oven, microwave oven and other appliances and other non-portable devices.

Thus, although the invention has been described with respect to a preferred embodiment thereof, it will be understood by those skilled in the art that the foregoing and various other changes, omissions and deviations in the form and detail thereof may be made without departing from the scope of this invention.

The further object of the present invention is to provide a general diffractive optics method that uses a plurality of diffractive elements on an optical substrate for expanding the exit pupil of a display of an electronic device for viewing.

According to an embodiment of the present invention, this method can be used for optical coupling in an optical device and it is characterized by expanding of an exit pupil of an input optical beam provided in an output optical beam, wherein the optical device comprises: a substrate of optical material (or an optical substrate) having a first surface and an opposing second surface; a first (in-coupling) diffractive element disposed on the substrate for receiving an input optical beam (or an input light beam) defined by a wave-vector $k_{in}$ and containing periodic lines with a period d; a second (out-coupling) diffractive element disposed on the substrate in relationship with the first diffractive element and containing further periodic lines with the period d, substantially parallel to lines of the first diffractive element; and an intermediate (expanding) diffractive element disposed adjacent to the first and the second diffractive elements, which periodic lines are at an angle p with respect to the lines of first and second diffractive element in the plane of the optical substrate.

Furthermore, at least part of the received light beam is diffracted in the first diffractive element for providing a diffracted light component, having a wave-vector $\mathbf{k_0}$, to the intermediate diffractive element substantially within the first and second surfaces (e.g., undergoing a total internal reflection). Moreover, at least part of the diffracted light component in the intermediate diffractive element is diffracted again to the first diffraction order, having wave-vector $\mathbf{k_2}$, and finally coupled to the second diffractive element substantially between the first and second surfaces (again, e.g., undergoing a total internal reflection) so as to allow at least part of the coupled diffracted light component to exit the substrate by diffraction in the second diffractive element thus providing an output optical beam defined by a further wave-vector $\mathbf{k_{out}}$. Typically, the second diffractive element generates also another output beam, which wave-vector is a mirror image of the wave vector $\mathbf{k_{out}}$ with respect to the substrate surface. As this wave vector is otherwise identical to the wave vector $\mathbf{k_{out}}$ and in real applications it is intentionally damped to a low value, therefore it is not considered further separately from the wave vector $\mathbf{k_{out}}$.

According to an embodiment of the present invention, the intermediate diffraction grating contains still further periodic lines with an angle (or a rotation angle) between the periodic lines of the first diffractive element and the still further periodic lines of p, and the period d' of the still further periodic lines is given by

$$0.9d/2\cos\rho < d' < 1.1d/2\cos\rho \qquad\qquad (1).$$

According to an embodiment of the present invention, a light component is incident and diffracted (e.g., to a first order) on the intermediate diffraction element an even number of times before providing said at least part of the diffracted light component to the second diffraction element. The fact of said even number of diffractions on the intermediate diffraction element implies, as proven below, that the further wave-vector $\mathbf{k_2}$ has exactly the same direction as the wave-vector $\mathbf{k_0}$, which is generated from the input optical beam with the wave-vector $\mathbf{k_{in}}$ under appropriate opearating conditions, i.e., the system is geometrically accurate.

Moreover, according to an embodiment of the present invention, the first diffractive element, the second diffractive element or the intermediate diffractive element can be disposed on the first surface or on the second surface of the optical substrate. Furthermore, according to an embodiment of the present invention, the first diffractive element, the second diffractive element or the intermediate diffractive element can be a planar diffraction grating manufactured using lithographic methods or classically ruled (having different groove angles and profiles, such as binary, triangular, sinusoidal, etc.).

The generalized method, according to the present invention provides conditions for supporting a broad variety of rotations angles p such that the system is geometrically accurate (i.e., wave-vectors $\mathbf{k_{in}}$ and $\mathbf{k_{out}}$ have the same direction). The period of the first diffractive element is such that it supports only zero and first order transmissive diffraction modes, which are used to couple the light into the substrate. It is shown below that if the intermediate diffractive element supports only the zero and first order reflective modes and other modes are forbidden, then the system can support a broad range of rotation angles $0 < \rho < 70°$ and beyond. That means that a broad range of conical incident angles (at least between 0 and 70° and beyond) can be supported by the intermediate diffractive element (the conical angle is an angle between the plane of an incident beam and a plane perpendicular to the periodic lines).

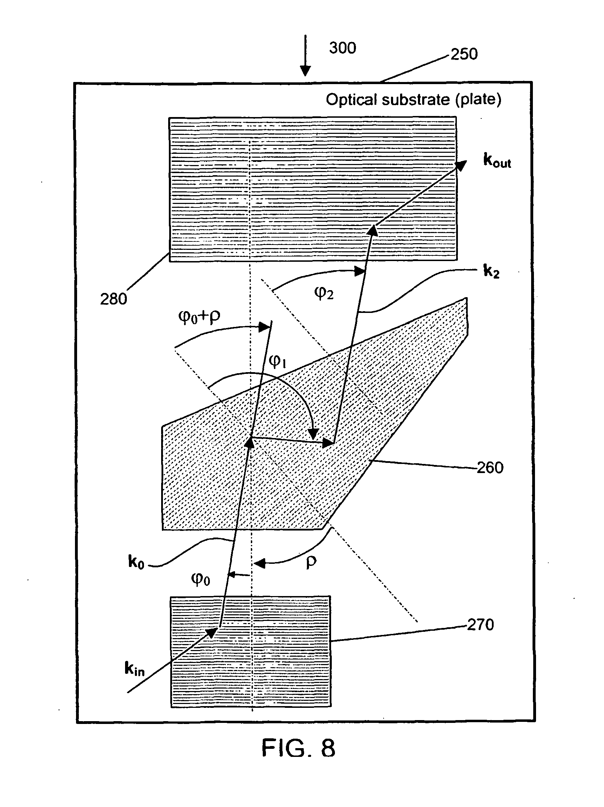

Figure 8 shows one example among others of a schematic representation for geometry of a generalized two-dimensional (2D) exit pupil expander (EPE) **300,** according to the present invention, illustrating the general diffractive optics method described above. Figure 8 shows a top view of an optical substrate (plate) **250** with three diffractive elements disposed on the optical substrate **250**: the first (in-coupling) diffractive element (an in-coupling diffraction grating) **270** having the line period d, the second diffractive element (an out-coupling diffraction grating) **280** having the line period d (periodic lines of the gratings **270** and **280** are being parallel) and the intermediate (expanding) diffracting element (an intermediate diffraction grating) **260** having the line period d' given by the Equation 1 and which periodic lines are at an angle p with respect to the lines of first and second diffractive elements **270** and **280** in the plane of the optical substrate, as shown in Figure 8.

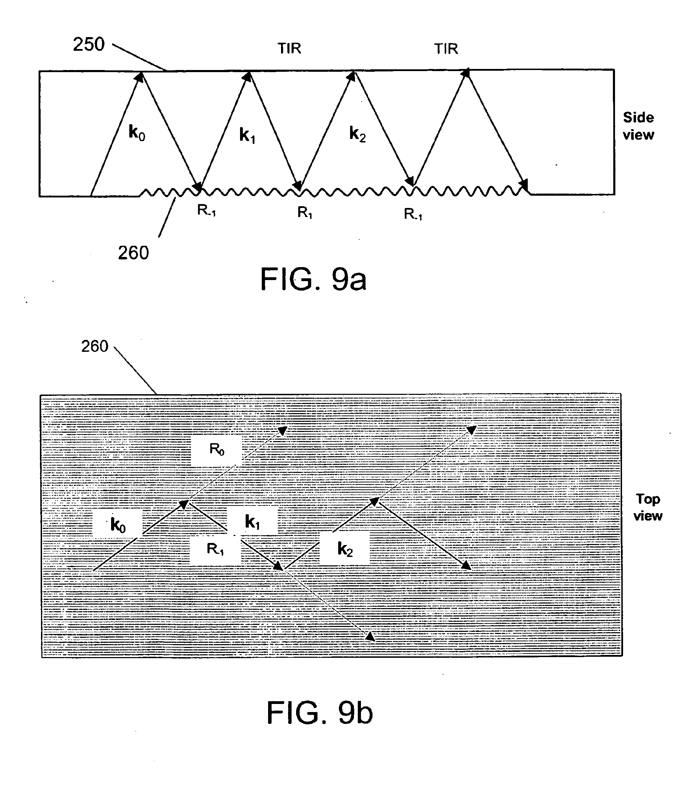

In order to prove that the angles are preserved when the optical beam is diffracted to the first order two times from the same diffraction grating, Figures 9a and 9b show a schematic representation (side and top views, respectively) of an optical substrate (transparent plate) **250** of Figure 8 with the intermediate diffraction grating **260** disposed on its surface.

The optical beam entering the diffraction grating **260** is described by a wave-vector $\mathbf{k_0}$ which has component angles $(\theta_0, \varphi_0)$ which are formed with a coordinate axis in the plane of the plate **250** perpendicular to periodic lines of the grating **260** and an axis perpendicular to the surface of the optical substrate **250,** respectively. The angles $(\theta_0, \varphi_0)$ are the result of the first order diffraction from the in-coupling grating and are governed by equations

$$\begin{cases} n \sin \theta_0 \sin \varphi_0 = \sin \theta_{in} \sin \varphi_{in} \\ n \sin \theta_0 \cos \varphi_0 = \sin \theta_{in} \cos \varphi_{in} + \dfrac{\lambda}{d} \end{cases} \tag{2},$$

wherein the +1 transmissive order has been chosen for consideration. For the other mode -1 we get similar equations, but the signs of modes are reversed. The refractive index of the plate **250** is n and for air the index of refraction is 1. The optical beam is diffracted to reflected orders -1 and 0. For the angles of the diffracted mode -1 we have a pair of equations

$$\begin{cases} n \sin \theta_1 \sin \varphi_1 = n \sin \theta_0 \sin(\varphi_0 + \rho) \\ n \sin \theta_1 \cos \varphi_1 = n \sin \theta_0 \cos(\varphi_0 + \rho) - \dfrac{\lambda}{d} \end{cases} \tag{3},$$

which define the components of the wave-vector $\mathbf{k_1}$, described by the angles $(\theta_1, \varphi_1)$ which are formed with the same coordinate axes as angles $(\theta_0, \varphi_0)$.

The optical beam propagates to the upper surface and then after total internal reflection to the lower surface where it meets again the grating **260**. This optical beam will be diffracted to the reflected order 1 and 0 by the diffraction grating **260**. The reflected order 1 has angles $(\theta_2, \varphi_2)$ which are formed with the same coordinate axes as angles $(\theta_0, \varphi_0)$ inside the plate **250**. The wave-vector $\mathbf{k_2}$ is now defined by equations

$$\begin{cases} n \sin \theta_2 \sin \varphi_2 = n \sin \theta_1 \sin \varphi_1 = n \sin \theta_0 \sin(\varphi_0 + \rho) \\ n \sin \theta_2 \cos \varphi_2 = n \sin \theta_1 \cos \varphi_1 + \dfrac{\lambda}{d} = n \sin \theta_0 \cos(\varphi_0 + \rho) \end{cases} \tag{4},$$

from where we see that $\theta_0 = \theta_2$ and $\varphi_0 = \varphi_2 - \rho$.

The optical beam described by the wave-vector $\mathbf{k_2}$ is then coupled to the out-coupling diffraction grating **280**. Finally the out-coupling grating **280** couples the beam out from the plate to the wave-vector $\mathbf{k_{out}}$ described by angles $(\theta_{rout}, \varphi_{rout})$. The equations are

$$\begin{cases} \sin \theta_{out} \sin \varphi_{out} = n \sin \theta_2 \sin(\varphi_2 - \rho) = \sin \theta_{in} \sin \varphi_{in} \\ \sin \theta_{out} \cos \varphi_{out} = n \sin \theta_2 \cos(\varphi_2 - \rho) - \dfrac{\lambda}{d} = \sin \theta_{in} \cos \varphi_{in} \end{cases} \tag{5}.$$

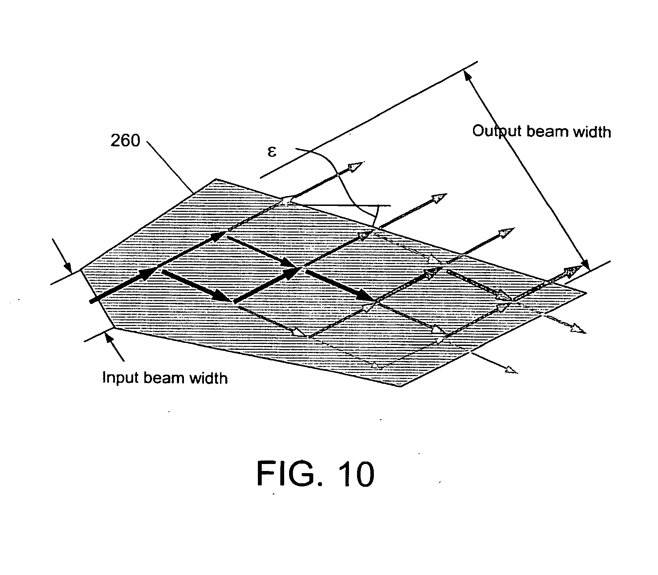

This proves that the beam direction is unchanged when the light beams escaping the intermediate grating area have an even number of first order diffractions from the grating. This principle is further demonstrated in the example of Figure 10.

To guarantee, that there are exactly even number of first order diffractions in the intermediate diffraction grating that are redirected to the out-coupling grating, the leaving edge of the intermediate diffraction grating **260** must be at certain angle with respect to the grating lines, as shown in Figure 10. The relation for the angle is

$$\varepsilon \leq \min \left\{ \tan^{-1} \left| \frac{\sin \theta_{in} \cos(\varphi_{in} + \rho) - \dfrac{\lambda}{d} \cos \rho}{\sin \theta_{in} \sin(\varphi_{in} + \rho) + \dfrac{\lambda}{d} \sin \rho} \right| \right\} \tag{6}.$$

The angles $(\theta_{in}, \varphi_{in})$ are any angles in the specified field of view.

To guarantee that there in the intermediate grating are only zero and first reflective diffraction order, we need to place some requirements to the grating period and the rotation angle in addition to the range of the line period d' given by the Equation 1.

Using conical equations, the wave-vector component in the direction perpendicular to the surface of the optical substrate **250** inside the optical substrate **250** can be calculated which allows to derive a condition for modes -1 and 0 to exist as described by

$$n > \frac{\lambda}{d} \qquad\qquad (7).$$

This condition of Equation 7 is valid in all practical cases as far the rotation angle ρ is concerned.

The condition that there are no transmissive modes in the intermediate diffraction grating is $\lambda / d > 1$ and it is valid in all practical cases. Another requirement is that no other reflected modes should exist in the intermediate diffraction grating. It is enough to consider only the lowest of the diffraction modes, *i.e.,* -2 and +1, and we get accordingly a condition

$$\sqrt{1 + 8\cos^2 \rho} > \frac{nd}{\lambda} \qquad\qquad (8).$$

This condition described by Equation 8 is typically valid for 0<ρ<70°. That means that a broad range of conical incident angles (at least between 0 and 70° and beyond) can be supported by the intermediate diffraction grating (the conical angle is the angle φo+ρ in Figure 8), wherein the range for the line period d' is given by the Equation 1. The range for d' given by Equation I can be significantly broader under different conditions. For example, it can be shown that for ρ=60° and a horizontal field of view of ±12° the range for d' is extended to 0.66d/2cosρ<d' < 1.24d/2cosρ.

The efficiency of the intermediate diffraction grating reaches very high values at about 60° rotation angle such that the diffraction efficiencies are almost equal for both TE and TM polarizations.

It is to be understood that the above-described arrangements are only illustrative of the application of the principles of the present invention. Numerous modifications and alternative arrangements may be devised by those skilled in the art without departing from the scope of the present invention, and the appended claims are intended to cover such modifications and arrangements.

**Claims**

**1.** An optical device (10, 300) comprising:

a substrate (20, 250) of optical material having a first surface and an opposing second surface;
a first diffractive (30, 270) element disposed on the substrate configured to receive a light beam;
a second diffractive element (50, 280) disposed on the substrate (20, 250) in relationship with the first diffractive element and having substantially the same grating orientation as the first diffractive element; and
an intermediate diffractive element (40, 260) disposed between the first and the second diffractive elements, wherein
the first diffractive element (30, 270) is configured to diffract at least part of the received light beam within the first and second surfaces for providing a diffracted light component to the intermediate diffractive element (40, 280) in an incident direction, and
the intermediate diffractive element is configured to couple by diffraction substantially between the first and second surfaces at least part of the diffracted light component for providing a coupled diffracted light component to the second diffractive element (50, 280); and
the second diffractive element is configured to couple by diffraction at least part of the coupled diffracted light component to exit the substrate (20, 250) for providing an output light beam, wherein the intermediate diffractive element (40, 260) has a substantially periodic pattern composed of substantially linear elements along a pattern direction for producing conical diffraction, wherein the coupled diffracted light component is substantially parallel to the diffracted light component, wherein the width of the coupled diffracted light component is greater than the width of the diffracted light component, and wherein the width of the output light beam is greater than the width of the received light beam in a first direction and in a second direction perpendicular to the first direction.

2. An optical.device according to claim 1, wherein the angle between the incident direction (72) of the diffracted light component provided to the intermediate diffractive element (40, 260) and the plane perpendicular to the pattern direction in the conical diffraction is between 50 and 70 degrees.

3. An optical device according to claim 1, wherein the intermediate diffractive element (40, 260) has a substantially periodic pattern composed of substantially linear elements along a pattern direction so that the incident direction (72) of the diffracted light component provided to the intermediate diffractive element is within an angular range between 20 and 40 degrees relative to the pattern direction.

4. An optical device according to claim 3, further comprising:

a third diffractive element (50') disposed on the substrate in relationship with the first diffractive element (30) spaced from the second diffractive element (50); and
a further intermediate diffractive element (40') disposed between the first and the third diffractive elements, wherein
the first diffractive element is configured to diffract a further part of the received light beam within the first and second surfaces for providing a further diffracted light component to the further intermediate diffractive element (40') in a further incident direction, and
the further intermediate diffractive element is configured to couple by diffraction substantially between the first and second surfaces at least part of the further diffracted light component for providing a further coupled diffracted light component to the third diffractive element (50') ; and
the third diffractive element (50') is configured to couple at least part of the further coupled diffracted light component to exit the substrate by diffraction in the third diffractive element (50'), wherein the further intermediate diffractive element (40') has a substantially periodic pattern composed of substantially linear elements along a pattern direction such that the incident (72') direction of the diffracted light component provided to the further intermediate different element (40') is within an angular range between 50 and 70 degrees relative to the pattern direction.

5. An optical device according to claim 1, wherein the received light beam (70) is received in the first diffractive element through the first surface and at least part of the coupled diffracted light component exits the substrate through the second surface.

6. An optical device according to claim 1, wherein the received light beam is received in the first diffractive element (70) through the first surface and at least part of the coupled diffracted light component exits the substrate through the first surface.

7. An optical device according to claim 1, wherein the intermediate diffractive element (40, 260) comprises a plurality of grooves forming the period pattern.

8. An optical device according to claim 1, wherein the first diffractive element (30) has a period pattern composed of a plurality of linear elements along a pattern direction substantially perpendicular to the incident direction.

9. An optical device according to claim 1, wherein the second diffractive element (50) has a period pattern composed of a plurality of linear elements along a pattern direction substantially perpendicular to the incident direction.

10. An optical device according to claim 1, wherein
said light beam is defined by a wave-vector $k_{in}$ and said first diffraction element (270) comprises periodic lines with a period d;
said second diffractive element (280) comprises further periodic lines with a period of d, wherein said further periodic lines are parallel to said periodic lines of the first diffractive element;
said intermediate diffractive element (260) comprises still further periodic lines with the period defined by a range $0.9d/2\cos\rho$ to $1.1d/2\cos\rho$, wherein p is an angle between said periodic lines and the still further periodic lines; and
said at least part of the coupled diffracted light component exits the substrate (250) by said diffraction in the second diffractive element for providing an output light beam defined by a further wave-vector $k_{out}$ having exactly the same direction as the wave-vector $k_{in}$ of said light beam.

**11.** An optical device according to claim 10, wherein said intermediate diffraction element is configured to diffract said at least part of the diffracted light component to a first order an even number of times before providing said coupled diffracted light component to said second diffractive element.

**12.** An optical device according to claim 10, wherein said intermediate diffractive element (260) is configured to support only reflective zero and reflective first order diffraction modes by an index of refraction of said substrate being n>λ/d, wherein λ is a wavelength of the input optical beam.

**13.** An optical device according to claim 10, wherein a predetermined condition is maintained, said condition is that said intermediate diffractive element is configured not to support a second or higher order modes, and said condition is expressed as $\sqrt{1+8\cos^2\rho} > \dfrac{nd}{\lambda}$, wherein n is an index of refraction of said substrate, λ is a wavelength of the input optical beam.

**14.** An optical device according to claim 13, wherein o<ρ<70°.

**15.** An optical device according to claim 10, wherein a predetermined condition is maintained, said condition is that said intermediate diffractive element is configured not to support transmission modes, and said condition is expressed as λ/d>1, wherein λ is a wavelength of the input optical beam.

**16.** An optical device according to claim 10, wherein said first diffractive element (270), said second diffractive element (280) or said intermediate diffractive element (260) is disposed on said first surface or on said second surface.

**17.** An electronic device (100) comprising:

a data processing unit (214);
an optical engine (190) operatively connected to the data processing unit for receiving image data from the data processing unit;
a display device (192) operatively connected to the optical engine for forming an image based on the image data; and
an optical device (10, 300) according to any preceding claim.

**18.** An electronic device according to claim17, comprising a computer game device or a digital camera.

**19.** An electronic device according to claim 17, further comprising a communications unit (212) for receiving signals containing information indicative of the image data, wherein the data processing unit is operatively connected to the communications unit for receiving the information.

**20.** An electronic device according to claim 19, comprising a mobile terminal.

**21.** A method of optical coupling in an optical device, the method comprising:

receiving a light beam at a first diffractive element disposed on a substrate of optical material having a first surface and an opposing second surface;
diffracting at least part of the received light beam in the first diffractive element substantially within the first and second surfaces for providing a diffracted light component to an intermediate diffractive element at an incident direction;
further diffracting at least part of said diffracted light component by said intermediate diffractive element substantially between the first and second surfaces for providing a coupled diffracted light component to a second diffractive element so as to allow at least part of the coupled diffracted optical component to exit the substrate for providing an output light beam by diffraction in the second diffractive element, wherein
said second diffractive element is disposed on said substrate in relationship with the first diffractive element and having substantially the same grating orientation as the first diffractive element and
said intermediate diffractive element is disposed adjacent to the first and the second diffractive elements and has a substantially periodic pattern composed of substantially linear elements along a pattern direction to produce conical diffraction, wherein the coupled diffracted light component is substantially parallel to the diffracted light component, wherein the width of the coupled diffracted light component is greater than the width of the diffracted light component, and wherein the width of the output light beam is greater than the width of the received light beam in a first direction and in a second direction perpendicular to the first direction.

22. A method according to claim 21, wherein the intermediate diffractive element (50) has a substantially periodic pattern composed of substantially linear elements along a pattern direction such that the incident direction (72) of the diffracted light component is within an angular range between 20 and 40 degrees relative to the pattern direction.

23. A method according to claim 22, further comprising:

diffracting a further part of the receive light beam in the first diffractive element substantially within the first and second surfaces for providing a further diffracted light component to a further intermediate diffractive element;
further diffracting at least part of said further diffracted light component by said intermediate diffractive element substantially between the first and second surfaces for providing a further coupled diffracted light component to a third diffractive element so as to allow at least part of the further coupled diffracted optical component to exit the substrate by diffraction in the third diffractive element, wherein
the third diffractive element disposed on the substrate in relationship with the first diffractive element spaced from the second diffractive element; and
the further intermediate diffractive element disposed between the first and the third diffractive elements, and the intermediate diffractive element has a substantially periodic pattern composed of substantially linear elements along a pattern direction such that the incident direction of the diffracted light component is within an angular range between 50 and 70 degrees relative to the pattern direction.

24. A method according to claim 21, wherein the first diffractive element (30) having a substantially period pattern composed of substantially linear elements along a first pattern direction, and the second diffractive element (50) having a substantially period pattern composed of substantially linear elements along a second pattern direction substantially parallel to the first pattern direction.

25. A method according to claim 21, wherein
said light beam is defined by a wave-vector $k_{in}$ and said first diffraction element (270) comprises periodic lines with a period d;
said second diffractive element (280) comprises further periodic lines with a period of d, wherein said further periodic lines are parallel to said periodic lines of the first diffractive element;
said intermediate diffractive element (260) comprises still further periodic lines with the period defined by a range $0.9d/2\cos\rho$ to $1.1d/2\cos\rho$, wherein p is an angle between said periodic lines and the still further periodic lines; and
said at least part of the coupled diffracted light component exits the substrate (250) by said diffraction in the second diffractive element for providing an output light beam defined by a further wave-vector $k_{out}$ having exactly the same direction as the wave-vector $k_{in}$ of said light beam.

26. A method according to claim 25, wherein said intermediate diffraction element is configured to diffract said at least part of the diffracted light component to a first order an even number of times before providing said at least part of the diffracted light component to said second diffractive element.

**Patentansprüche**

1. Optische Einrichtung (10, 300), umfassend:

ein Substrat (20, 250) aus optischem Material mit einer ersten Fläche und einer gegenüberliegenden zweiten Fläche;
ein erstes diffraktives Element (30, 270), das auf dem Substrat angeordnet ist und dazu konfiguriert ist, einen Lichtstrahl zu empfangen;
ein zweites diffraktives Element (50, 280), das auf dem Substrat (20, 250) relativ zum ersten diffraktiven Element angeordnet ist und im Wesentlichen die gleiche Gitterorientierung wie das erste diffraktive Element aufweist; und
ein diffraktives Zwischenelement (40, 260), das zwischen dem ersten und dem zweiten diffraktiven Element angeordnet ist, wobei
das erste diffraktive Element (30, 270) dazu konfiguriert ist, mindestens einen Teil des empfangenen Lichtstrahls innerhalb der ersten und zweiten Fläche zu beugen, um dem diffraktiven Zwischenelement (40, 280) in einer Einfallsrichtung einen gebeugten Lichtanteil bereitzustellen, und

das diffraktive Zwischenelement dazu konfiguriert ist, durch Diffraktion im Wesentlichen zwischen der ersten und zweiten Fläche mindestens einen Teil des gebeugten Lichtanteils zu koppeln, um dem zweiten diffraktiven Element (50, 280) einen gekoppelten gebeugten Lichtanteil bereitzustellen; und

das zweite diffraktive Element dazu konfiguriert ist, durch Diffraktion mindestens einen Teil des gekoppelten gebeugten Lichtanteils zu koppeln, so dass er das Substrat (20, 250) verlässt, um einen Ausgangslichtstrahl bereitzustellen, wobei das diffraktive Zwischenelement (40, 260) ein im Wesentlichen periodisches Muster aufweist, das aus im Wesentlichen linearen Elementen entlang einer Musterrichtung besteht, um konische Diffraktion zu erzeugen, wobei der gekoppelte gebeugte Lichtanteil im Wesentlichen parallel zum gebeugten Lichtanteil ist, wobei die Breite des gekoppelten gebeugten Lichtanteils größer als die Breite des gebeugten Lichtanteils ist, und wobei die Breite des Ausgangslichtstrahls größer als die Breite des empfangenen Lichtstrahls in einer ersten Richtung und einer zur ersten Richtung senkrechten zweiten Richtung ist.

2. Optische Einrichtung nach Anspruch 1, wobei der Winkel zwischen der Einfallsrichtung (72) des gebeugten Lichtanteils, der dem diffraktiven Zwischenelement (40, 260) bereitgestellt wird, und der Ebene senkrecht zur Musterrichtung in der konischen Diffraktion zwischen 50 und 70 Grad liegt.

3. Optische Einrichtung nach Anspruch 1, wobei das diffraktive Zwischenelement (40, 260) ein im Wesentlichen periodisches Muster aufweist, das aus im Wesentlichen linearen Elementen entlang einer Musterrichtung besteht, so dass die Einfallsrichtung (72) des gebeugten Lichtanteils, der dem diffraktiven Zwischenelement bereitgestellt wird, in einem Winkelbereich zwischen 20 und 40 Grad relativ zur Musterrichtung liegt.

4. Optische Einrichtung nach Anspruch 3, ferner umfassend:

ein drittes diffraktives Element (50'), das auf dem Substrat relativ zum ersten diffraktiven Element (30) mit Abstand zum zweiten diffraktiven Element (50) angeordnet ist; und

ein weiteres diffraktives Zwischenelement (40'), das zwischen dem ersten und dem dritten diffraktiven Element angeordnet ist, wobei

das erste diffraktive Element dazu konfiguriert ist, einen weiteren Teil des empfangenen Lichtstrahls innerhalb der ersten und zweiten Fläche zu beugen, um dem weiteren diffraktiven Zwischenelement (40') in einer weiteren Einfallsrichtung einen weiteren gebeugten Lichtanteil bereitzustellen, und

das weitere diffraktive Zwischenelement dazu konfiguriert ist, durch Diffraktion im Wesentlichen zwischen der ersten und zweiten Fläche mindestens einen Teil des weiteren gebeugten Lichtanteils zu koppeln, um dem dritten diffraktiven Element (50') einen weiteren gekoppelten gebeugten Lichtanteil bereitzustellen; und

das dritte diffraktive Element (50') dazu konfiguriert ist, mindestens einen Teil des weiteren gekoppelten gebeugten Lichtanteils zu koppeln, so dass er das Substrat durch Diffraktion in dem dritten diffraktiven Element (50') verlässt, wobei das weitere diffraktive Zwischenelement (40') ein im Wesentlichen periodisches Muster aufweist, das aus im Wesentlichen linearen Elementen entlang einer Musterrichtung besteht, so dass die Einfallsrichtung (72') des gebeugten Lichtanteils, der dem weiteren diffraktiven Element (40') bereitgestellt wird, in einem Winkelbereich zwischen 50 und 70 Grad relativ zur Musterrichtung liegt.

5. Optische Einrichtung nach Anspruch 1, wobei der empfangene Lichtstrahl (70) in dem ersten diffraktiven Element durch die erste Fläche empfangen wird und mindestens ein Teil des gekoppelten gebeugten Lichtanteils das Substrat durch die zweite Fläche verlässt.

6. Optische Einrichtung nach Anspruch 1, wobei der empfangene Lichtstrahl in dem ersten diffraktiven Element (70) durch die erste Fläche empfangen wird und mindestens ein Teil des gekoppelten gebeugten Lichtanteils das Substrat durch die erste Fläche verlässt.

7. Optische Einrichtung nach Anspruch 1, wobei das diffraktive Zwischenelement (40, 260) mehrere Nuten umfasst, die das Periodenmuster bilden.

8. Optische Einrichtung nach Anspruch 1, wobei das erste diffraktive Element (30) ein Periodenmuster aufweist, das aus mehreren linearen Elementen entlang einer Musterrichtung im Wesentlichen senkrecht zur Einfallsrichtung besteht.

9. Optische Einrichtung nach Anspruch 1, wobei das zweite diffraktive Element (50) ein Periodenmuster aufweist, das aus mehreren linearen Elementen entlang einer Musterrichtung im Wesentlichen senkrecht zur Einfallsrichtung besteht.

**10.** Optische Einrichtung nach Anspruch 1, wobei
der Lichtstrahl durch einen Wellenvektor $k_{in}$ definiert ist und das erste diffraktive Element (270) periodische Linien mit einer Periode d umfasst;
das zweite diffraktive Element (280) weitere periodische Linien mit einer Periode d umfasst, wobei die weiteren periodischen Linien parallel zu den periodischen Linien des ersten diffraktiven Elements sind;
das diffraktive Zwischenelement (260) noch weitere periodische Linien mit der durch einen Bereich von 0,9d/2cosρ bis 1,1d/2cosρ definierten Periode, wobei p ein Winkel zwischen den periodischen Linien und den noch weiteren periodischen Linien ist, umfasst; und
der mindestens eine Teil des gekoppelten gebeugten Lichtanteils das Substrat (250) durch die Diffraktion in dem zweiten diffraktiven Element verlässt, um einen Ausgabelichtstrahl bereitzustellen, der durch einen weiteren Wellenvektor $k_{out}$ mit genau der gleichen Richtung wie der Wellenvektor $k_{in}$ des Lichtstrahls definiert ist.

**11.** Optische Einrichtung nach Anspruch 10, wobei das diffraktive Zwischenelement dazu konfiguriert ist, den mindestens einen Teil des gebeugten Lichtanteils eine gerade Anzahl von Malen in eine erste Ordnung zu beugen, bevor der gekoppelte gebeugte Lichtanteil dem zweiten diffraktiven Element bereitgestellt wird.

**12.** Optische Einrichtung nach Anspruch 10, wobei das diffraktive Zwischenelement (260) dazu konfiguriert ist, nur reflektierende Diffraktionsmoden nullter Ordnung und erster Ordnung zu unterstützen, indem ein Brechungsindex des Substrats $n>\lambda/d$ ist, wobei $\lambda$ eine Wellenlänge des Eingangslichtstrahls ist.

**13.** Optische Einrichtung nach Anspruch 10, wobei eine vorbestimmte Bedingung beibehalten wird, wobei die Bedingung besagt, dass das diffraktive Zwischenelement nicht zum Unterstützen von Moden zweiter oder höherer Ordnung konfiguriert ist, und die Bedingung als

$$\sqrt{1+8\cos^2\rho} > \frac{nd}{\lambda}$$

ausgedrückt wird, wobei n ein Brechungsindex des Substrats ist, $\lambda$ eine Wellenlänge des Eingangslichtstrahls ist.

**14.** Optische Einrichtung nach Anspruch 13, wobei $0<\rho<70°$.

**15.** Optische Einrichtung nach Anspruch 10, wobei eine vorbestimmte Bedingung beibehalten wird, wobei die Bedingung besagt, dass das diffraktive Zwischenelement nicht zum Unterstützen von Übertragungsmoden konfiguriert ist, und die Bedingung als $\lambda/d>1$ ausgedrückt wird, wobei $\lambda$ eine Wellenlänge des Eingangslichtstrahls ist.

**16.** Optische Einrichtung nach Anspruch 10, wobei das erste diffraktive Element (270), das zweite diffraktive Element (280) oder das diffraktive Zwischenelement (260) auf der ersten Fläche oder auf der zweiten Fläche angeordnet ist.

**17.** Elektronische Einrichtung (100), umfassend:

eine Datenverarbeitungseinheit (214);
eine optische Engine (190), die operativ mit der Datenverarbeitungseinheit verbunden ist, um Bilddaten aus der Datenverarbeitungseinheit zu empfangen;
eine Display-Einrichtung (192), die operativ mit der optischen Engine verbunden ist, um ein Bild auf Basis der Bilddaten zu bilden; und
eine optische Einrichtung (10, 300) nach einem vorhergehenden Anspruch.

**18.** Elektronische Einrichtung nach Anspruch 17, umfassend eine Computerspieleinrichtung oder eine Digitalkamera.

**19.** Elektronische Einrichtung nach Anspruch 17, ferner umfassend eine Kommunikationseinheit (212) zum Empfangen von Signalen, die Informationen enthalten, die für die Bilddaten bezeichnend sind, wobei die Datenverarbeitungseinheit operativ mit der Kommunikationseinheit zum Empfang der Informationen verbunden ist.

**20.** Elektronische Einrichtung nach Anspruch 19, ein Mobilendgerät umfassend.

**21.** Verfahren zum optischen Koppeln in einer optischen Einrichtung, wobei das Verfahren Folgendes umfasst:

Empfangen eines Lichtstrahls an einem ersten diffraktiven Element, das auf einem Substrat aus optischem Material mit einer ersten Fläche und einer gegenüberliegenden zweiten Fläche angeordnet ist;
Beugen mindestens eines Teils des empfangenen Lichtstrahls in dem ersten diffraktiven Element im Wesentlichen innerhalb der ersten und zweiten Fläche, um einem diffraktiven Zwischenelement einen gebeugten Lichtanteil mit einer Einfallsrichtung bereitzustellen;
weiteres Beugen mindestens eines Teils des gebeugten Lichtanteils durch das diffraktive Zwischenelement im Wesentlichen zwischen der ersten und zweiten Fläche, um einem zweiten diffraktiven Element einen gekoppelten gebeugten Lichtanteil bereitzustellen, damit mindestens ein Teil des gekoppelten gebeugten Lichtanteils das Substrat verlassen kann, um einen Ausgabelichtstrahl durch Diffraktion im zweiten diffraktiven Element bereitzustellen, wobei
das zweite diffraktive Element auf dem Substrat relativ zum ersten diffraktiven Element angeordnet ist und im Wesentlichen die gleiche Gitterorientierung wie das erste diffraktive Element aufweist und
das diffraktive Zwischenelement neben dem ersten und dem zweiten diffraktiven Element angeordnet ist und ein im Wesentlichen periodisches Muster aufweist, das aus im Wesentlichen linearen Elementen entlang einer Musterrichtung besteht, um konische Diffraktion zu erzeugen, wobei der gekoppelte gebeugte Lichtanteil im Wesentlichen parallel zum gebeugten Lichtanteil ist, wobei die Breite des gekoppelten gebeugten Lichtanteils größer als die Breite des gebeugten Lichtanteils ist, und wobei die Breite des Ausgangslichtstrahls größer als die Breite des empfangenen Lichtstrahls in einer ersten Richtung und einer zur ersten Richtung senkrechten zweiten Richtung ist.

**22.** Verfahren nach Anspruch 21, wobei das diffraktive Zwischenelement (50) ein im Wesentlichen periodisches Muster aufweist, das aus im Wesentlichen linearen Elementen entlang einer Musterrichtung besteht, so dass die Einfallsrichtung (72) des gebeugten Lichtanteils in einem Winkelbereich zwischen 20 und 40 Grad relativ zur Musterrichtung liegt.

**23.** Verfahren nach Anspruch 22, ferner umfassend:

Beugen eines weiteren Teils des empfangenen Lichtstrahls in dem ersten diffraktiven Element im Wesentlichen innerhalb der ersten und zweiten Fläche, um einem weiteren diffraktiven Zwischenelement einen weiteren gebeugten Lichtanteil bereitzustellen;
weiteres Beugen von mindestens einem Teil des weiteren gebeugten Lichtanteils durch das diffraktive Zwischenelement in Wesentlichen zwischen der ersten und zweiten Fläche, um einem dritten diffraktiven Element einen weiteren gekoppelten gebeugten Lichtanteil bereitzustellen, damit mindestens ein Teil des weiteren gekoppelten gebeugten Lichtanteils das Substrat durch Diffraktion in dem dritten diffraktiven Element verlassen kann, wobei
das dritte diffraktive Element auf dem Substrat relativ zum ersten diffraktiven Element im Abstand vom zweiten diffraktiven Element angeordnet ist; und
das weitere diffraktive Zwischenelement zwischen dem ersten und dem dritten diffraktiven Element angeordnet ist, und
das diffraktive Zwischenelement ein im Wesentlichen periodisches Muster aufweist, das aus im Wesentlichen linearen Elementen entlang einer Musterrichtung besteht, so dass die Einfallsrichtung des gebeugten Lichtanteils in einem Winkelbereich zwischen 50 und 70 Grad relativ zur Musterrichtung liegt.

**24.** Verfahren nach Anspruch 21, wobei das erste diffraktive Element (30) ein im Wesentlichen periodisches Muster, das aus im Wesentlichen linearen Elementen entlang einer ersten Musterrichtung besteht, aufweist und das zweite diffraktive Element (50) ein im Wesentlichen periodisches Muster, das aus im Wesentlichen linearen Elementen entlang einer zweiten Musterrichtung, die im Wesentlichen parallel zur ersten Musterrichtung ist, aufweist.

**25.** Verfahren nach Anspruch 21, wobei
der Lichtstrahl durch einen Wellenvektor $k_{in}$ definiert ist und das erste diffraktive Element (270) periodische Linien mit einer Periode d umfasst;
das zweite diffraktive Element (280) weitere periodische Linien mit einer Periode d umfasst, wobei die weiteren periodischen Linien parallel zu den periodischen Linien des ersten diffraktiven Elements sind:

das diffraktive Zwischenelement (260) noch weitere periodische Linien mit der durch einen Bereich von 0,9d/2cosρ bis 1,1d/2cosρ definierten Periode, wobei p ein Winkel zwischen den periodischen Linien und den noch weiteren periodischen Linien ist, umfasst; und

der mindestens eine Teil des gekoppelten gebeugten Lichtanteils das Substrat (250) durch die Diffraktion in dem zweiten diffraktiven Element verlässt, um einen Ausgabelichtstrahl bereitzustellen, der durch einen weiteren Wellenvektor $k_{out}$ mit genau der gleichen Richtung wie der Wellenvektor $k_{in}$ des Lichtstrahls definiert ist.

**26.** Verfahren nach Anspruch 25, wobei das diffraktive Zwischenelement dazu konfiguriert ist, den mindestens einen Teil des gebeugten Lichtanteils eine gerade Anzahl von Malen in eine erste Ordnung zu beugen, bevor der gebeugte Lichtanteil dem zweiten diffraktiven Element bereitgestellt wird.

## Revendications

**1.** Dispositif optique (10, 300) comprenant :

un substrat (20, 250) de matériau optique ayant une première surface et une deuxième surface opposée ;
un premier élément diffractant (30, 270) disposé sur le substrat, configuré pour recevoir un faisceau lumineux ;
un deuxième élément diffractant (50, 280) disposé sur le substrat (20, 250) en relation avec le premier élément diffractant et ayant sensiblement la même orientation de réseau que le premier élément diffractant ; et
un élément diffractant intermédiaire (40, 260) disposé entre les premier et deuxième éléments diffractants, dans lequel
le premier élément diffractant (30, 270) est configuré pour diffracter au moins une partie du faisceau lumineux reçu dans les première et deuxième surfaces afin de fournir une composante de lumière diffractée à l'élément diffractant intermédiaire (40, 280) dans une direction d'incidence, et
l'élément diffractant intermédiaire est configuré pour coupler par diffraction, sensiblement entre les première et deuxième surfaces, au moins une partie de la composante de lumière diffractée afin de fournir une composante de lumière diffractée couplée au deuxième élément diffractant (50, 280) ; et
le deuxième élément diffractant est configuré pour coupler par diffraction au moins une partie de la composante de lumière diffractée couplée devant sortir du substrat (20, 250) afin de fournir un faisceau lumineux de sortie, dans lequel l'élément diffractant intermédiaire (40, 260) présente un motif sensiblement périodique composé d'éléments sensiblement linéaires dans une direction du motif afin de produire une diffraction conique, dans lequel la composante de lumière couplée est sensiblement parallèle à la composante de lumière diffractée, dans lequel la largeur de la composante de lumière diffractée couplée est supérieure à la largeur de la composante de lumière diffractée, et dans lequel la largeur du faisceau lumineux de sortie est supérieure à la largeur du faisceau lumineux reçu dans une première direction et dans une deuxième direction perpendiculaire à la première direction.

**2.** Dispositif optique selon la revendication 1, dans lequel l'angle entre la direction d'incidence (72) de la composante de lumière diffractée fournie à l'élément diffractant intermédiaire (40, 260) et le plan perpendiculaire à la direction du motif dans la diffraction conique est compris entre 50 et 70 degrés.

**3.** Dispositif optique selon la revendication 1, dans lequel l'élément diffractant intermédiaire (40, 260) présente un motif sensiblement périodique composé d'éléments sensiblement linéaires dans une direction du motif de manière à ce que la direction d'incidence (72) de la composante de lumière diffractée fournie à l'élément diffractant intermédiaire se situe dans une plage angulaire comprise entre 20 et 40 degrés par rapport à la direction du motif.

**4.** Dispositif optique selon la revendication 3, comprenant en outre :

un troisième élément diffractant (50') disposé sur le substrat en relation avec le premier élément diffractant (30) espacé du deuxième élément diffractant (50) ; et
un élément diffractant intermédiaire supplémentaire (40') disposé entre les premier et troisième éléments diffractants, dans lequel
le premier élément diffractant est configuré pour diffracter une partie supplémentaire du faisceau lumineux reçu à l'intérieur des première et deuxième surfaces afin de fournir une composante de lumière diffractée supplémentaire à l'élément diffractant intermédiaire supplémentaire (40') dans une direction d'incidence supplémentaire, et
l'élément diffractant intermédiaire supplémentaire est configuré pour coupler par diffraction, sensiblement entre les première et deuxième surfaces, au moins une partie de la composante de lumière diffractée supplémentaire afin de fournir une composante de lumière diffractée couplée supplémentaire au troisième élément diffractant (50') ; et

le troisième élément diffractant (50') est configuré pour coupler au moins une partie de la composante de lumière diffractée couplée supplémentaire devant sortir du substrat par diffraction dans le troisième élément diffractant (50'), dans lequel l'élément diffractant intermédiaire supplémentaire (40') présente un motif sensiblement périodique composé d'éléments sensiblement linéaires dans une direction du motif de manière à ce que la direction d'incidence (72') de la composante de lumière diffractée fournie à l'élément diffractant intermédiaire supplémentaire (40') se situe dans une gamme angulaire comprise entre 50 et 70 degrés par rapport à la direction du motif.

5. Dispositif optique selon la revendication 1, dans lequel le faisceau lumineux reçu (70) est reçu dans le premier élément diffractant à travers la première surface et au moins une partie de la composante de lumière diffractée couplée sort du substrat à travers la deuxième surface.

6. Dispositif optique selon la revendication 1, dans lequel le faisceau lumineux reçu est reçu dans le premier élément difractant (70) à travers la première surface et au moins une partie de la composante de lumière difractée couplée sort du substrat à travers la première surface.

7. Dispositif optique selon la revendication 1, dans lequel l'élément diffractant intermédiaire (40, 260) comprend une pluralité de rainures formant le motif périodique.

8. Dispositif optique selon la revendication 1, dans lequel le premier élément diffractant (30) présente un motif périodique composé d'une pluralité d'éléments linéaires dans une direction du motif sensiblement perpendiculaire à la direction d'incidence.

9. Dispositif optique selon la revendication 1, dans lequel le deuxième élément diffractant (50) présente un motif périodique composé d'une pluralité d'éléments linéaires dans une direction du motif sensiblement perpendiculaire à la direction d'incidence.

10. Dispositif optique selon la revendication 1, dans lequel

ledit faisceau lumineux est défini par un vecteur d'onde $\mathbf{k_{in}}$ et ledit premier élément de diffraction (270) comprend des lignes périodiques de période d ;

ledit deuxième élément diffractant (280) comprend des lignes périodiques supplémentaires de période d, lesdites lignes périodiques supplémentaires étant parallèles auxdites lignes périodiques du premier élément diffractant ;

ledit élément diffractant intermédiaire (260) comprend d'autres lignes périodiques supplémentaires dont la période est définie par une plage de 0,9d/2cosρ à 1,1d/2cosρ, où p est un angle formé entre lesdites lignes périodiques et les autres lignes périodiques supplémentaires ; et

ladite au moins une partie de la composante de lumière diffractée couplée sort du substrat (250) du fait de ladite diffraction se produisant dans le deuxième élément diffractant afin de fournir un faisceau lumineux de sortie défini par un vecteur d'onde supplémentaire $\mathbf{k_{out}}$ ayant exactement la même direction que le vecteur d'onde $\mathbf{k_{in}}$ dudit faisceau lumineux.

11. Dispositif optique selon la revendication 10, dans lequel ledit élément de diffraction intermédiaire est configuré pour diffracter ladite au moins une partie de la composante de lumière diffractée à un premier ordre un nombre de fois pair avant de fournir ladite composante de lumière diffractée couplée audit deuxième élément diffractant.

12. Dispositif optique selon la revendication 10, dans lequel ledit élément diffractant intermédiaire (260) est configuré pour n'accepter que des modes de diffraction d'ordre zéro en réflexion et du premier ordre en réflexion en raison du fait qu'un indice de réfraction dudit substrat est n>λ/d, où λ est une longueur d'onde du faisceau optique d'entrée.

13. Dispositif optique selon la revendication 10, dans lequel une condition prédéterminée est maintenue, ladite condition étant que ledit élément diffractant intermédiaire soit configuré pour ne pas accepter un mode du deuxième ordre ou des modes d'ordre supérieur, ladite condition étant exprimée par $\sqrt{1+8\cos^2\rho} > \dfrac{nd}{\lambda}$, où n est un indice de réfraction dudit substrat, et λ est une longueur d'onde du faisceau optique d'entrée.

**14.** Dispositif optique selon la revendication 13, dans lequel 0 < ρ < 70°.

**15.** Dispositif optique selon la revendication 10, dans lequel une condition prédéterminée est maintenue, ladite condition étant que ledit élément diffractant intermédiaire soit configuré de manière à ne pas accepter des modes de transmission, ladite condition étant exprimée par $\lambda/d > 1$, où $\lambda$ est une longueur d'onde du faisceau optique d'entrée.

**16.** Dispositif optique selon la revendication 10, dans lequel ledit premier élément diffractant (270), ledit deuxième élément difractant (280) ou ledit élément diffractant intermédiaire (260) est disposé sur ladite première surface ou sur ladite deuxième surface.

**17.** Dispositif électronique (100) comprenant :

une unité de traitement de données (214) ;
un moteur optique (190) fonctionnellement relié à l'unité de traitement de données pour recevoir des données d'images de l'unité de traitement de données ;
un dispositif d'affichage (192) fonctionnellement relié au moteur optique pour former une image sur la base des données d'images ; et
un dispositif optique (10, 300) selon l'une quelconque des revendications précédentes.

**18.** Dispositif électronique selon la revendication 17, comprenant un dispositif de jeu d'ordinateur ou un appareil photo numérique.

**19.** Dispositif électronique selon la revendication 17, comprenant en outre une unité de communication (212) destinée à recevoir des signaux contenant des informations représentatives des données d'images, l'unité de traitement de données étant fonctionnellement reliée à l'unité de communication pour recevoir les informations.

**20.** Dispositif électronique selon la revendication 19, comprenant un terminal mobile.

**21.** Procédé de couplage optique dans un dispositif optique, le procédé comprenant :

la réception d'un faisceau lumineux sur un premier élément diffractant disposé sur un substrat de matériau optique ayant une première surface et une deuxième surface opposées ;
la diffraction d'au moins une partie du faisceau lumineux reçu dans le premier élément diffractant, sensiblement à l'intérieur des première et deuxième surfaces, afin de fournir une composante de lumière diffractée à un élément diffractant intermédiaire dans une direction d'incidence ;
la diffraction supplémentaire d'au moins une partie de ladite composante de lumière diffractée par ledit élément diffractant intermédiaire, sensiblement entre les première et deuxième surfaces, afin de fournir une composante de lumière diffractée couplée à un deuxième élément diffractant de manière à permettre à au moins une partie de la composante optique diffractée couplée de sortir du substrat afin de fournir un faisceau lumineux de sortie par diffraction dans le deuxième élément difractant, dans lequel
ledit deuxième élément diffractant est disposé sur ledit substrat en relation avec le premier élément diffractant et présente sensiblement la même orientation de réseau que le premier élément diffractant, et
ledit élément diffractant intermédiaire est disposé de manière adjacente aux premier et deuxième éléments diffractants et présente un motif sensiblement périodique composé d'éléments sensiblement linéaires dans une direction du motif afin de produire une diffraction conique, dans lequel la composante de lumière diffractée couplée est sensiblement parallèle à la composante de lumière diffractée, dans lequel la largeur de la composante de lumière diffractée couplée est supérieure à la largeur de la composante de lumière diffractée, et dans lequel la largeur du faisceau lumineux de sortie est supérieure à la largeur du faisceau lumineux reçu dans une première direction et dans une deuxième direction perpendiculaire à la première direction.

**22.** Procédé selon la revendication 21, dans lequel l'élément diffractant intermédiaire (50) présente un motif sensiblement périodique composé d'éléments sensiblement linéaires dans une direction du motif de manière à ce que la direction d'incidence (72) de la composante de lumière diffractée se situe dans une plage angulaire comprise entre 20 et 40 degrés par rapport à la direction du motif.

**23.** Procédé selon la revendication 22, comprenant en outre :

la diffraction d'une partie supplémentaire du faisceau lumineux reçu dans le premier élément diffractant, sensiblement à l'intérieur des première et deuxième surfaces, afin de fournir une composante de lumière diffractée supplémentaire à un élément diffractant intermédiaire supplémentaire ;

la diffraction supplémentaire d'au moins une partie de ladite composante de lumière diffractée supplémentaire par ledit élément diffractant intermédiaire, sensiblement entre les première et deuxième surfaces, afin de fournir une composante de lumière diffractée couplée supplémentaire à un troisième élément diffractant de manière à permettre à au moins une partie de la composante optique diffractée couplée supplémentaire de sortir du substrat par diffraction dans le troisième élément diffractant, dans lequel le troisième élément diffractant est disposé sur le substrat en relation avec le premier élément diffractant espacé du deuxième élément diffractant ; et l'élément diffractant intermédiaire supplémentaire est disposé entre les premier et troisième éléments diffractants, et

l'élément diffractant intermédiaire présente un motif sensiblement périodique composé d'éléments sensiblement linéaires dans une direction du motif de manière à ce que la direction d'incidence de la composante de lumière diffractée se situe dans une plage angulaire comprise entre 50 et 70 degrés par rapport à la direction du motif.

24. Procédé selon la revendication 21, dans lequel le premier élément diffractant (30) présente un motif sensiblement périodique composé d'éléments sensiblement linéaires dans une première direction du motif, et le deuxième élément diffractant (50) présente un motif sensiblement périodique composé d'éléments linéaires sensiblement périodiques dans une deuxième direction du motif sensiblement parallèle à la première direction du motif.

25. Procédé selon la revendication 21, dans lequel ledit faisceau lumineux est défini par un vecteur d'onde $k_{in}$ et ledit premier élément de diffraction (270) comprend des lignes périodiques de période d ;

ledit deuxième élément diffractant (280) comprend des lignes périodiques supplémentaires de période d, dans lequel lesdites lignes périodiques supplémentaires sont parallèles auxdites lignes périodiques du premier élément diffractant ;

ledit élément diffractant intermédiaire (260) comprend d'autres lignes périodiques supplémentaires dont la période est définie par une gamme de 0,9d/2cosρ à 1,1d/2cosρ, où p est un angle formé entre lesdites lignes périodiques et les autres lignes périodiques supplémentaires ; et

ladite au moins une partie de la composante de lumière diffractée couplée sort du substrat (250) du fait de ladite diffraction se produisant dans le deuxième élément diffractant afin de fournir un faisceau lumineux de sortie défini par un vecteur d'onde supplémentaire $k_{out}$ ayant exactement la même direction que le vecteur d'onde $k_{in}$ dudit faisceau lumineux.

26. Procédé selon la revendication 25, dans lequel ledit élément de diffraction intermédiaire est configuré pour diffracter ladite au moins une partie de la composante de lumière diffractée à un premier ordre un nombre de fois pair avant de fournir ladite au moins une partie de la composante de lumière diffractée audit deuxième élément diffractant.

FIG. 1
(prior art)

FIG. 4

y

x

10

52

30

42

42

52

42

32

40

40'

50

20

50'

## FIG. 2

10

z

80

50

40

72'

74'

y

20

80'

x

22

50

24

74

72

30

40'

50'

70

## FIG. 3

FIG. 5

FIG. 6

100

210

Communication
unit

212

Control & processing
unit

214

Microdisplay

192

230

Optical engine

190

Exit pupil extender

10

# FIG. 7

**FIG. 8**

250
TIR
TIR

$k_0$
$k_1$
$k_2$

Side view

$R_{-1}$
$R_1$
$R_{-1}$

260

## FIG. 9a

260

$R_0$

$k_0$
$k_1$

$R_1$

$k_2$

Top view

## FIG. 9b

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9952002 A

- US 6580529 B